(19) Europäisches Patentamt / European Patent Office / Office européen des brevets

(11) **EP 2 183 318 B1**

(12) **EUROPEAN PATENT SPECIFICATION**

(45) Date of publication and mention
of the grant of the patent:
**07.03.2012 Bulletin 2012/10**

(51) Int Cl.:
***C08L 67/02*** *(2006.01)*

(21) Application number: **08798491.0**

(22) Date of filing: **22.08.2008**

(86) International application number:
**PCT/US2008/074029**

(87) International publication number:
**WO 2009/032560 (12.03.2009 Gazette 2009/11)**

(54) **OXYGEN SCAVENGING PLASTIC COMPOSITIONS**

SAUERSTOFFABSORBIERENDE KUNSTSTOFFZUSAMMENSETZUNGEN

COMPOSITIONS PLASTIQUES ABSORBANT L'OXYGÈNE

(84) Designated Contracting States:
**AT BE BG CH CY CZ DE DK EE ES FI FR GB GR
HR HU IE IS IT LI LT LU LV MC MT NL NO PL PT
RO SE SI SK TR**

(30) Priority: **31.08.2007 US 969278 P**

(43) Date of publication of application:
**12.05.2010 Bulletin 2010/19**

(73) Proprietor: **Invista Technologies S.A R.L.
9000 St. Gallen (CH)**

(72) Inventors:
  • **CHEN, Yan**
    **Greer, SC 29650 (US)**
  • **SUN, Qun**
    **Wilmington, DE 19808 (US)**
  • **DRBOHLAV, Joseph**
    **Inman, SC 29349 (US)**

(74) Representative: **Cockerton, Bruce Roger et al
Carpmaels & Ransford
One Southampton Row
London
WC1B 5HA (GB)**

(56) References cited:
    **EP-A- 0 437 942      WO-A-01/10947**

  • **DATABASE WPI Week 198921 Thomson
    Scientific, London, GB; AN 1989-156102
    XP002505245 & JP 01 098624 A (SANYO CHEM
    IND LTD) 17 April 1989 (1989-04-17)**

**Description**

**FIELD OF THE INVENTION**

This invention relates to organic polymeric compositions that provide an active oxygen gas barrier to articles.

**BACKGROUND OF THE INVENTION**

Plastic materials, such as polyesters, have been replacing glass and metal packaging materials due to their lighter weight, decreased breakage compared to glass, and potentially lower cost. One problem in this use of polyester for these applications is its relatively high gas permeability. This restricts the shelf life of carbonated soft drinks and oxygen sensitive materials such as beer and fruit juices. Organic oxygen scavenging materials for use in mixtures with plastic materials, such as polyesters, have been developed partly in response to the food industry's goal of having longer shelf-life for packaged materials.

One method of using oxygen scavenging materials which is currently being employed involves the use of "active packaging" where the package is modified in some way so as to control the exposure of the product to oxygen. For example, "active packaging" can include sachets containing iron based compositions which scavenge oxygen within the package through an oxidation reaction.

Other techniques involve incorporating an oxygen scavenger into the package structure itself. In such a package structure, oxygen scavenging materials constitute at least a portion of the package. These materials remove oxygen from the enclosed package volume which surrounds the product or which may leak into the package, thereby inhibiting spoilage and prolonging freshness in the case of food products. Oxygen scavenging materials used in this package structure include low molecular-weight oligomers that are typically incorporated into polymers or oxidizable organic polymers in which either the backbone or side-chains of the polymer react with oxygen. A common oxidizable polymer used in a package structure is a polyamide, such as MXD-6 nylon. Such oxygen scavenging materials are typically employed with a suitable catalyst, for example an organic or inorganic salt of a transition metal catalyst such as cobalt.

Multilayer bottles containing a low gas permeable polymer as an inner layer, with polyesters as the other layers have also been commercialized. The use of multilayer bottles that contain inner layers of an oxygen scavenging material is commonplace. Typically, the center layer is a blend of inorganic or organic polymeric, oxygen scavenging material.

U.S. Pat. No. 6,455,620 discloses polyethers, such as poly(alkylene oxide) glycols - for example polytetramethylene oxide glycol, as oxygen scavenging moieties blended with thermoplastic polymers and a transition metal catalyst. The compositions taught in U.S. Pat. No. 6,455,620, when blended with polyesters, have a high level of haze in stretch blow molded containers.

Therefore, a need exists for an oxygen scavenging composition that can be used as a blend in monolayer packaging articles and is compatible with polyester such that these articles made from these materials have a low haze level.

**SUMMARY OF THE INVENTION**

In accordance with the present invention, an oxygen scavenging composition has been found that produces articles having low haze level. The present invention can be characterized by a composition comprising a polyester, a copolyester ether and an oxidation catalyst, wherein the copolyester ether comprises a polyether segment comprising poly(tetramethylene-co-alkylene ether).

**DETAILED DESCRIPTION OF THE INVENTION**

The present invention relates to a composition comprising a polyester, a copolyester ether and an oxidation catalyst, wherein the copolyester ether comprises a polyether segment comprising poly(tetramethylene-co-alkylene ether).

The copolyester ethers of the present invention can comprise at least one polyether segment comprising poly(tetramethylene-co-alkylene ether), wherein the alkylene can be $C_2$ to $C_4$, for example poly(tetramethylene-co-ethylene ether). The molecular weight of the polyether segment can be in the range of from about 200 g/mole to about 5000 g/mole, for example from about 1000 g/mole to about 3000 g/mole. The mole % of alkylene oxide in the polyether segment can be in the range of from about 10 mole % to about 90 mole %, for example from about 25 mole % to about 75 mole % or from about 40 mole % to about 60 mole %. For use in the preparation of the copolyester ether, the end group of the polyether segment is hydroxyl, for example a poly(tetramethylene-co-alkylene oxide) glycol which for example can be poly(tetramethylene-co-ethylene oxide) glycol or poly(tetramethylene-co-propylene oxide) glycol.

Poly(tetramethylene-co-alkylene oxide) glycols, for example poly(tetramethylene-co-ethylene oxide) glycols [poly(THF-EO) glycols], can be prepared by methods such as the acid catalyzed copolymerization of the THF and EO, followed by neutralizing the reaction product. An example of this method would be the random copolymerization of THF and EO in an autoclave using 13.4-28.2 weight parts ethylene glycol, 72.7-241.4 weight parts THF, 236-411.8 weight parts EO and 15.3-32.3 weight parts boron trifluoride ethyl etherate, at conditions of ordinary pressure and temperature of 30 °C. Ethylene glycol is used as the initiation agent and boron trifluoride ethyl etherate is used as the acid catalyst. After completion of the copolymerization, the acid catalyst in the product is neutralized with an alkali. Finally, the precipitates are filtered and dried with nitrogen gas at 100 °C.

Other poly(alkylene oxide) glycols can be used in combination with the poly(tetramethylene-co-alkylene oxide) glycols described above, for example poly(ethylene oxide) glycol, poly(trimethylene oxide) glycol, poly(tetramethylene oxide) glycol, poly(pentamethylene oxide) glycol, poly(hexamethylene oxide) glycol, poly(heptamethylene oxide) glycol, poly(octamethylene oxide) glycol or poly(alkylene oxide) glycols derived from cyclic ether monomers, for example poly (2,3-dihydrofurandiyl).

The total amount of copolyester ether in the final composition is chosen to provide the desired oxygen scavenging performance of the article formed from the composition. Amounts of the copolyester ether can be at least about 0.5 weight % of the total composition, or in the range of from about 0.5 weight % to about 10 weight % of the total composition, for example from about 1.0 weight % to about 5.0 weight % or from about 1.5 weight % to about 3.0 weight % of the total composition. The copolyester ether can be physically blended with the polyester. Alternatively, the poly(tetramethylene-co-alkylene oxide) glycol, and the other poly(alkylene oxide) glycols, can be copolymerized with the polyester.

The copolyester ethers can be produced by processes used to prepare polyesters, such as ester interchange with the dialkyl ester of a dicarboxylic acid or direct esterification with the dicarboxylic acid. In the ester interchange process dialkyl esters of dicarboxylic acids undergo transesterification with one or more glycols in the presence of a catalyst such as a compound of manganese, zinc, cobalt, titanium, calcium, magnesium or lithium. In the direct esterification process, one or more dicarboxylic acids are esterified with one or more glycols. The poly(tetramethylene-co-alkylene oxide) glycols and optionally the other poly(alkylene oxide) glycols replace part of these glycols in these esterification processes. The poly(tetramethylene-co-alkylene oxide) glycols and optionally the other poly(alkylene oxide) glycols can be added with the starting raw materials or added after esterification. In either case, the monomer and oligomer mixture can be produced continuously in a series of one or more reactors operating at elevated temperature and pressures at one atmosphere or greater. Alternatively, the monomer and oligomer mixture can be produced in one or more batch reactors. In batch processes, a monomer heel, comprising the monomer bishydroxyethylterephthalate (BHET) can be left in the esterification reactor to aid the esterification of the next batch. Suitable conditions for these reactions are temperatures of from about 180° C to 250° C and pressures of from about 0.1 MPa to 0.4 MPa (1 bar to 4 bar).

Next, the mixture of copolyester ether monomer and oligomers undergoes melt-phase polycondensation to produce a low molecular weight precursor polymer. The precursor is produced in a series of one or more reactors operating at elevated temperatures. To facilitate removal of excess glycols, water, and other reaction products, the polycondensation reactors are run under a vacuum. Catalysts for the polycondensation reaction include compounds of antimony, germanium, tin, titanium and aluminum. Reaction conditions for polycondensation can include (i) a temperature less than about 290° C, or about 10° C higher than the melting point of the copolyester ether; and (ii) a pressure of less than about 0.001 MPa (0.01 bar), decreasing as polymerization proceeds. This copolyester ether can be produced continuously in a series of one or more reactors operating at elevated temperature and pressures less than one atmosphere. Alternatively this copolyester ether can be produced in one or more batch reactors. The intrinsic viscosity after melt phase polymerization can be in the range of from about 0.5 dl/g to about 1.5 dl/g.

After extruding the molten copolyester ether through a die, the strands are quenched in a bath of cold water and cut into pellets. These pellets can be fed directly into an extruder for forming the article, or solid stated at conventional conditions until the desired molecular weight is attained.

The copolyester ethers can contain the polyether segment in the range of from about 15 weight % to 95 weight % of the copolyester ether, for example from about 25 weight % to about 75 weight % or from about 30 weight % to about 70 weight % of the copolyester ether, using ethane glycol, butane diol or propane diol as the other glycol. The dicarboxylic acid can be terephthalic acid or dimethyl terephthalate. Antioxidants and photo initiators can be added during polymerization to control the initiation of the oxygen scavenging.

Suitable oxidation catalysts include transition metal catalysts that activate or promote the oxidation of the copolyester ether. The transition metal can be in the form of a transition metal salt with the metal selected from the first, second or third transition series of the Periodic Table. Suitable transition metals include cobalt, copper, rhodium, ruthenium, palladium, tungsten, osmium, cadmium, silver, tantalum, hafnium, vanadium, titanium, chromium, nickel, zinc, manganese or mixtures thereof. Suitable counter ions for the metal include, but are not limited to, carboxylates, such as neodecanoates, octanoates, stearates, acetates, naphthalates, lactates, maleates, acetylacetonates, linoleates, oleates, palminates or 2-ethyl hexanoates, oxides, borides, carbonates, chlorides, dioxides, hydroxides, nitrates, phosphates, sulfates, silicates or mixtures thereof. For example, cobalt stearate and cobalt acetate are oxidation catalysts that can be used in the present invention. Any amount of catalyst which is effective in catalyzing oxygen scavenging can be used, for example at least about 10 ppm of the total composition or in the range of from about 25 ppm to about 500 ppm of the total composition, for example from about 50 ppm to about 250 ppm or from about 50 ppm to about 100 ppm of the total composition. The oxidation catalyst can be added during polymerization or compounded as a polyester based master batch that can be added during the preparing of the article formed by blending polyester with the copolyester ether.

Polyesters to be used in this invention can be produced from the reaction of a diacid or diester component comprising at least 65 mole% terephthalic acid or $C_1$-$C_4$ dialkylterephthalate, for example from at least 65 mole% to at least 95 mole% or at least 95 mole%; and a diol component comprising at least 65% mole% ethylene glycol, for example from at least 65 mole% to at least 95 mole% or at least 95 mole%. The diacid component can be terephthalic acid and the diol component can be ethylene glycol, thereby forming polyethylene terephthalate (PET). The mole percent for all the diacid component totals 100 mole%, and the mole percentage for all the diol component totals 100 mole%.

Where the polyester components are modified by one or more diol components other than ethylene glycol, suitable diol components of the described polyester can be selected from 1, 4-cyclohexandedimethanol, 1,2-propanediol, 1, 4-butanediol, 2,2-dimethyl-1, 3-propanediol, 2-methyl -1, 3-propanediol (2MPDO), 1,6-hexanediol, 1,2-cyclohexanediol, 1,4-cyclohexanediol, 1,2-cyclohexanedimethanol, 1,3-cyclohexanedimethanol, 2,2,4,4-tetramethyl-1,3-cyclobutane diol or diols containing one or more oxygen atoms in the chain, for example, diethylene glycol, triethylene glycol, dipropylene glycol, tripropylene glycol or a mixtures thereof. The diols can contain 2 to 18 carbon atoms, for example 2 to 8 carbon atoms. Cycloaliphatic diols can be employed in their cis or trans configuration, or as a mixture of both forms. Modifying diol components can be 1,4-cyclohexanedimethanol or diethylene glycol, or a mixture of these.

Where the polyester components are modified by one or more acid components other than terephthalic acid, the suitable acid components (aliphatic, alicyclic, or aromatic dicarboxylic acids) of the linear polyester can be selected from isophthalic acid, 1,4-cyclohexanedicarboxylic acid, 1,3-cyclohexanedicarboxylic acid, succinic acid, glutaric acid, adipic acid, sebacic acid, 1,12-dodecanedioic acid, 2,6-naphthalenedicarboxylic acid, bibenzoic acid, or mixtures of these and the like. In the polymer preparation, a functional acid derivative thereof can be used such as the dimethyl, diethyl, or dipropyl ester of the dicarboxylic acid. The anhydrides or acid halides of these acids also can be employed where practical. These dicarboxylic acid modifiers generally retard the crystallization rate compared to terephthalic acid. A polyester that can be used in the present invention is the copolymer of PET and isophthalic acid. Generally the isophthalic acid can be present from about 1 mole % to about 10 mole %, or from about 1.5 mole % to 6 mole % of the copolymer.

In addition to polyester made from terephthalic acid (or dimethyl terephthalate) and ethylene glycol, or a modified polyester as stated above, the present invention can also include use of 100% of an aromatic diacid such as 2, 6-naphthalene dicarboxylic acid or bibenzoic acid, or their diesters, and a modified polyester made by reacting at least 85 mol- % of the dicarboxylate from these aromatic diacids/diesters with any of the above comonomers.

The polyester of the present invention can be at least one member selected from polyethylene terephthalate, polyethylene naphthalate, polyethylene isophthalate, copolymers of polyethylene terephthalate, copolymers of polyethylene naphthalate, copolymers of polyethylene isophthalate or mixtures thereof.

The composition of the present invention can further comprise an additive. The additive can be selected from heat stabilizers, anti-blocking agents, antioxidants, antistatic agents, UV absorbers, toners (for example pigments and dyes), fillers, branching agents, or other typical agents. The additive can be added to the composition generally during or near the end of the polycondensation reaction. Conventional systems can be employed for the introduction of additives to achieve the desired result.

The composition of the present invention can be used in articles of manufacture. Suitable articles include, but are not limited to, film, sheet, tubing, pipes, fiber, container preforms, blow molded articles such as rigid containers, thermoformed articles, flexible bags and the like and combinations thereof. Typical rigid or semi-rigid articles can be formed from plastic, paper or cardboard cartons or bottles such as juice, milk, soft drink, beer and soup containers, thermoformed trays or cups. In addition, the walls of such articles often comprise multiple layers of materials. This invention can be used in one, some, or all of those layers.

Another embodiment of the present invention is a method for reducing the gas permeability of polyester articles comprising: adding a copolyester ether to a polyester, melting the mixture, and forming an article; wherein the copolyester ether comprises a polyether segment comprising poly(tetramethylene-co-alkylene ether).

TEST PROCEDURES

**1. Intrinsic viscosity**

Intrinsic viscosity (IV) was determined by dissolving 0.2 grams of the polymer with 20 milliliters of dichloroacetic acid (DCA) at a temperature of 76.5°C for 40 minutes. The solution was cooled and placed in an Ubbelhode viscometer in a constant temperature bath at 25° C for 30 minutes prior to the measurement of the drop time, which is compared to that of the pure DCA to determine the relative viscosity (RV). RV is converted to IV using equation:

$$IV = [(RV - 1) \times 0.6907] + 0.0631.$$

## 2. Oxygen Permeability of films

Oxygen flux of film samples, at zero percent relative humidity, at one atmosphere pressure, and at 25°C was measured with a Mocon Ox-Tran model 2/20 (MOCON Minneapolis, MN). A mixture of 98% nitrogen with 2% hydrogen was used as the carrier gas, and 100% oxygen was used as the test gas. Prior to testing, specimens were conditioned in nitrogen inside the unit for a minimum of twenty-four hours to remove traces of atmospheric oxygen dissolved in the PET matrix. The conditioning was continued until a steady base line was obtained where the oxygen flux changed by less than one percent for a thirty-minute cycle. Subsequently, oxygen was introduced to the test cell. The test ended when the flux reached a steady state where the oxygen flux changed by less than 1 % during a 30 minute test cycle, normally after 72 hours, unless otherwise stated. Calculation of the oxygen permeability was done according to a literature method for permeation coefficients for PET copolymers, from Fick's second law of diffusion with appropriate boundary conditions. The literature documents are: Sekelik et al., Journal of Polymer Science Part B: Polymer Physics, 1999, Volume 37, Pages 847-857. The second literature document is Qureshi et al., Journal of Polymer Science Part B: Polymer Physics, 2000, Volume 38, Pages 1679-1686. The third literature document is Polyakova, et al., Journal of Polymer Science Part B: Polymer Physics, 2001, Volume 39, Pages 1889-1899.
All film permeability values are reported in units of $(cc.cm)/(m^2.atm.day))$.

## 3. Bottle Oxygen Transmission Rate

The ASTM F1307-2 *Test Method for Oxygen Transmission Rate through Dry Packages using a Coulometric Sensor* was followed. Oxygen flux of bottle samples , at ambient relative humidity (~ 50-70%) outside, at one atmosphere pressure, and at 23 °C was measured with a Mocon Ox-Tran model 2/61 (MOCON Minneapolis, MN). A mixture of 98% nitrogen with 2% hydrogen was used as the carrier gas, and ambient air (20.9%oxygen) was used as the test gas. Prior to testing, specimens were conditioned (or purged) with nitrogen, at a flow rate of 10 sccm (std. cubic cm per min) for a minimum of twenty-four hours to remove traces of atmospheric oxygen. After the conditioning period, $O_2$ testing was continued until a steady base line was obtained where the oxygen flux changed by less than one percent for a 45-minute cycle. The test ended when the flux reached a steady state where the oxygen flux changed by less than 1 % during a 45 minute test cycle. The bottle oxygen transmission rate (cc/pkg-day) was calculated.

## 4. Haze and Color

The haze of the preform and bottle walls was measured with a Hunter Lab ColorQuest II instrument. D65 illuminant was used with a CIE 1964 10° standard observer. The haze is defined as the percent of the CIE Y diffuse transmittance to the CIE Y total transmission. Unless otherwise stated the % haze was measured on the sidewall of a stretch blow molded bottle having a thickness of 0.25 mm. The color of the preform and bottle walls was measured with the same instrument and was reported using the CIELAB color scale, L* is a measure of brightness, a* is a measure of redness (+) or greenness (-) and b* is a measure of yellowness (+) or blueness (-).

## 5. Metal content

The metal content of the ground polymer samples was measured with an Atom Scan 16 ICP Emission Spectrograph. The sample was dissolved by heating in ethanolamine, and on cooling, distilled water was added to crystallize out the terephthalic acid. The solution was centrifuged, and the supernatant liquid analyzed. Comparison of atomic emissions from the samples under analysis with those of solutions of known metal ion concentrations was used to determine the experimental values of metals retained in the polymer samples. This method is used to determine the cobalt concentration in the composition.

## 6. Preform and bottle process

Unless otherwise stated, the polymers, copolymers and copolyester ethers of the present invention were dried for about 30 hours at 90 - 110° C, blended with the dried base resin and a dried master batch of the transition metal catalyst, melted and extruded into preforms. Each preform for a 0.5 liter soft drink bottle, for example, employed about 24 - 25 grams of the resin. The preform was then heated to about 100 - 120°C and blown-molded into a 0.5 liter contour bottle at a stretch ratio of about 12.5. The sidewall thickness was 0.25 mm.

### 7. Preparation of Cobalt masterbatch

98 wt. % pre-dried PET resin, Invista PolyClear® 2201 resin, (150°C for 48 hours in vacuum oven) and 2 wt. % cobalt stearate particles were mixed with bucket tumbler. The blended chip-powder was melt-mixed in a Haake Rheocord 90 (Haake-Buchler Instruments) with a Haake Buchler Rheomex TW100 twin-screw extruder (conical, partially intermeshing, counter-rotating twin screw), and extruded through a single-strand die. The screw speed varied from 10 to 100 rpm. The extruder had four heat zones with a sequential temperature set up as 200°C, 255°C, 255°C and 248°C (extrusion die). The molten strand was water-quenched and chopped into pellets by a Scheer-bay pelletizer.

### 8. Copolyester ether composition

0.1g of COPE sample was dissolved in 0.75ml 1,1,2,2-Tetrachloroethane-$d_2$ @ ~100°C. The proton NMR spectrum was recorded at 22°C @500MHz on a Varian 500MHz Unity Inova instrument.
The molar ratio of terephthalic radical to the (poly(EO-THF) plus diol) radicals was one. The integrated signal peak at 8.1 ppm corresponds to the α-protons of terephthalic radical (TA) ($I_{TA}$). The integrated signal peak at 1.7 ppm corresponds to the β-protons from the THF segments ($I_{\beta THF}$). The integrated signal peaks in the range of 4.6-4.8 ppm correspond the protons from the diol (ethylene glycol) ($I_{diol}$). The other integrated peaks in the range of 3.0 to 4.5 ppm correspond to the summation the α-protons of the THF and EO ($I_{other}$).
The mole % incorporation of EO in the poly(EO-THF) was calculated from equation (1):

$$EO_{inc.} \text{ (mole \%)} = 100 \, ( I_{other} - I_{\beta THF})/I_{other} . \qquad (1)$$

The mole % of the poly(EO-THF) segments in the COPE was calculated from equation (2):

$$Poly(EO\text{-}THF)_{inc.} \text{ (mole \%)} = 100 \, ( I_{TA} - I_{diol})/ I_{TA} . \qquad (2)$$

The weight % of poly(EO-THF) segments in the COPE was calculated from equation (3):

$$Poly(EO\text{-}THF)_{inc.} \text{ (wt \%)} = 100 \, [( I_{other} - I_{\beta THF})*44/4 + I_{\beta THF} *72/4] / [ ( I_{other} - I_{\beta THF})*44/4 + I_{\beta THF} *72/4 + I_{TA} *148/4 + I_{diol} *44/4]. \qquad (3)$$

### EXAMPLES

**Example 1** (Comparative)

Bishydroxyethylterephthalate (BHET) (254.2 g, 1.0 mole), and polytetramethylene oxide glycol (Invista Terathane® glycol PTMEG, MW 2000 g/mole, 400.0 g, 0.2 mole), Vertec™ AC420, and a titanium chelate catalyst supplied by Johnson Mathy, IL USA (0.828 g, 30 ppm Ti based on polymer) were charged into a reactor equipped with a condenser, reflux column and stirrer. The materials, which were stirred continuously during the polymerization, were heated to a temperature of 230°C, and the pressure was reduced to <0.3 mm Hg, and then the temperature was ramped to 250°C. The polymer was held at this temperature until the required melt viscosity, as measured by the stirrer amperage, was met. The reactor was pressurized slightly with nitrogen and the product extruded into chilled water. After the polymer strand cooled, it was pelletized with Scheer-bay pelletizer. The IV of the copolyester ether was 1.26 dl/g. The resultant copolyester ether (A) contained 69 weight % of the polyether segment. This polyether segment content is equivalent to the molar quantity of the PTMEG added.

**Example 2**

Example 1 was repeated replacing the 0.2 mole of PTMEG by 0.2 mole of poly(tetramethylene-co-ethylene oxide) glycol [poly(THF-EO) glycol] of molecular weight 2000 g/mole and 50 mole % EO incorporation. The resultant copolyester ether (B) contained 69 weight % of the polyether segment.

**Example 3**

The copolyester ethers of Example 1 (A) and Example 2 (B) were dried and blended at a various loadings with dried commercial polyester bottle resin, Invista PolyClear® 2201 polyester resin, and dried cobalt master batch and fed to the throat of a commercial preform injection molding machine. The final resin composition contained 100 ppm cobalt metal. The preforms were stretch blow molded into bottles. The bottle sidewall haze was measured and the results set forth in Table 1.

Table 1

| Copolyester ether | wt. % copolyester ether | Haze, % |
|---|---|---|
| Control | 0 | 2.3 |
| A | 1 | 8.6 |
| B | 1 | 3.7 |
| A | 1.5 | 10.0 |
| B | 1.5 | 4.3 |

**Example 4** (Comparative)

Example 1 was repeated using a PTMEG of MW 1000 g/mole to provide a resultant copolyester ether (C) containing 52.5 weight % of the polyether segment.

**Example 5**

Example 2 was repeated using a poly(THF-EO) glycol of MW 1000 g/mole with 50 mole % EO incorporation to provide a resultant copolyester ether (D) containing 52.5 weight % of the polyether segment.

**Example 6**

The copolyester ethers of Example 4 (C) and Example 5 (D) were blended with the base PET resin and masterbatch according to the method described in Example 3. The bottle sidewall haze and oxygen permeability (after a number of days) were measured. The results are set forth in Table 2.

Table 2

| Copolyester ether | Wt. % copolyester ether | Haze, % | Oxygen Permeability cc.cm/($m^2$.day.atm) (@ days) |
|---|---|---|---|
| Control | 0 | 1.4 | 0.20 (10 and 228) |
| C | 1 | 3.4 | 0.14 ( 228) |
| D | 1 | 1.9 | 0.03 (10) |
| C | 2 | 3.8 | 0.12 (228) |
| D | 2 | 2.6 | 0.11 (133) |

**Example 7**

DMT (194.2 g, 1.0 mole), butanediol (115.1 g, 1.278 mole) and poly(THF-EO) glycol (MW 2000 g/mole, 444.0 g, 0.222 mole), tetrabutyl titanate (0.229 g, 50 ppm Ti based on polymer), and 0.116 gram magnesium acetate (180 ppm based on polymer) were charged into a reactor equipped with a condenser, reflux column and stirrer. The materials, which were stirred continuously during the polymerization, were heated to a temperature of 160-230°C until the ester interchange reaction was complete, as evidenced by the amount of methanol removed. The temperature was ramped to 250°C and the pressure reduced to < 0.3 mmHg. The polymer was held at this temperature until the required melt viscosity, as measured by the stirrer amperage, was met. The reactor was pressurized slightly with nitrogen and the product extruded into chilled water. The polymer strand was pelletized with Scheer-bay pelletizer. The IV of the resultant copolyester ether (E) was 1.15 dl/g and contained 69 weight % of the polyether segment.

**Example 8** (Comparative)

DMT (194.2 g, 1.0 mole), butanediol (115.1 g, 1.278 mole) and PTMEG (MW 2000 g/mole, 444.0 g, 0.222 mole), tetrabutyl titanate (0.229 g, 50 ppm Ti based on polymer), and 0.116 gram magnesium acetate (180 ppm based on polymer) were charged into a reactor equipped with a condenser, reflux column and stirrer. The materials, which were stirred continuously during the polymerization, were heated to a temperature of 160-230°C until the ester interchange reaction was complete, as evidenced by the amount of methanol removed. The temperature was ramped to 250°C and the pressure reduced to < 0.3 mmHg. The polymer was held at this temperature until the required melt viscosity, as measured by the stirrer amperage, was met. The reactor was pressurized slightly with nitrogen and the product extruded into chilled water. The polymer strand was pelletized with Scheer-bay pelletizer. The IV of the resultant copolyester ether (F) was 1.04 dl/g and contained 69 weight % of the polyether segment.

**Example 9**

The copolyester ethers of Example 7 (E) and Example 8 (F) were separately blended with the base PET resin and masterbatch according to the method described in Example 3. The bottle sidewall hazes are set forth in Table 3.

Table 3

| Copolyester ether | Wt. % copolyester ether | Haze, % |
|---|---|---|
| Control | 0 | 1.2 |
| E | 1 | 6.5 |
| F | 1 | 7.0 |
| E | 1.5 | 7.9 |
| F | 1.5 | 7.9 |

**Example 10**

Example 2 was repeated using 0.15 mole poly(THF-EO) glycol of MW 2000 g/mole with 50 mole% EO incorporation to provide a resultant copolyether ester (G) containing 62 weight % of the polyether segment.

**Example 11**

Example 2 was repeated using 0.12 mole poly(THF-EO) glycol of MW 2000 g/mole with 50 mole% EO incorporation to provide a resultant copolyether ester (H) containing 56 weight % of the polyether segment.

**Example 12**

The copolyester ethers of Example 10 (G) and Example 11 (H) were dried and blended at a various loadings with dried commercial polyester bottle resin, Invista PolyClear® 2201 polyester resin, and dried cobalt master batch and fed to the throat of a commercial preform injection molding machine. The final resin composition contained 100 ppm cobalt metal. The preforms were stretch blow molded into bottles. The full bottle oxygen transmission rate was measured, together with a control bottle using Invista PolyClear® 2201 polyester resin and the results set forth in Table 4.

Table 4

| Copolyester ether | Wt. % Copolyester Ether | Bottle Age (Days) | Oxygen Transmission Rate (cc/ package-day) |
|---|---|---|---|
| Control | 0 | 90 | 0.052 |
| G | 2.0 | 90 | 0.0016 |
| G | 2.0 | 182 | 0.0058 |

(continued)

| Copolyester ether | Wt. % Copolyester Ether | Bottle Age (Days) | Oxygen Transmission Rate (cc/package-day) |
|---|---|---|---|
| H | 2.0 | 97 | 0.0039 |
| H | 2.0 | 195 | 0.0074 |
| G | 3.0 | 90 | 0.0020 |
| G | 3.0 | 182 | 0.0004 |
| H | 3.0 | 97 | 0.0003 |
| H | 3.0 | 195 | 0.0009 |

While the invention has been described in conjunction with specific embodiments thereof, it is evident that many alternatives, modifications, and variations will be apparent to those skilled in the art in light of the foregoing description. Accordingly, it is intended to embrace all such alternatives, modifications, and variations as fall within the broad scope of the appended claims.

## Claims

1. A composition comprising a polyester, a copolyester ether and an oxidation catalyst, wherein the copolyester ether comprises a polyether segment comprising poly(tetramethylene-co-alkylene ether).

2. The composition of claim 1 wherein said copolyester ether further comprises a polyether segment of a poly(alkylene oxide) glycol selected from the group consisting of poly(ethylene oxide) glycol, poly(trimethylene oxide) glycol, poly(tetramethylene oxide) glycol, poly(pentamethylene oxide) glycol, poly(hexamethylene oxide) glycol, poly(heptamethylene oxide) glycol, poly(octamethylene oxide) glycol and poly(alkylene oxide) glycols derived from cyclic ether monomers.

3. The composition of claim 1 wherein said alkylene of said poly(tetramethylene-co-alkylene ether) is selected from the group consisting of ethylene, propylene and butylene.

4. The composition of clam 3 wherein said alkylene is ethylene.

5. The composition of claim 1 wherein the molecular weight of said polyether segment is in the range of from 200 g/mole to 5000 g/mole.

6. The composition of claim 1 wherein said copolyester ether is present in an amount of at least 0.5 % by weight of the total composition.

7. The composition of claim 1 wherein said copolyester ether is present in an amount of from 0.5 % by weight to 10 % by weight of the total composition.

8. The composition of claim 1 wherein said polyether segment is present in an amount of from 15 % by weight to 95 % by weight of said copolyester ether.

9. The composition of claim 1 wherein said polyester is at least one member selected from the group consisting of polyethylene terephthalate, polyethylene naphthalate, polyethylene isophthalate, copolymers of polyethylene terephthalate, copolymers of polyethylene naphthalate, copolymers of polyethylene isophthalate, and mixtures thereof.

10. The composition of claim 9 wherein said polyester is a copolymer of polyethylene terephthalate.

11. The composition of claim 1 wherein the oxidation catalyst comprises a transition metal salt comprising i) a metal comprising at least one member selected from the group consisting of cobalt, copper, rhodium, ruthenium, palladium, tungsten, osmium, cadmium, silver, tantalum, hafnium, vanadium, titanium, chromium, nickel, zinc, manganese and mixtures thereof, and ii) a counter ion comprising at least one member selected from the group consisting of carboxylate, oxide, boride, carbonate, chloride, dioxide, hydroxide, nitrate, phosphate, sulfate, silicate and mixtures thereof.

12. The composition of claim 11 wherein said carboxylate is selected from the group consisting of neodecanoate, octanoate, stearate, acetate, naphthalate, lactate, maleate, acetylacetonate, linoleate, oleate, palminate, and 2-ethyl hexanoate.

13. The composition of claim 1 wherein said oxidation catalyst comprises cobalt stearate or cobalt acetate.

14. The composition of claim 1 wherein said oxidation catalyst is present in an amount of at least 10 ppm of the total composition.

15. The composition of claim 1 wherein said oxidation catalyst is present in an amount of from 50 ppm to 500 ppm of the total composition.

16. The composition of claim 1 further comprising an additive.

17. The composition of claim 16 wherein the additive comprises at least one member selected from the group consisting of a heat stabilizer, an anti-blocking agent, an antioxidant, an antistatic agent, a UV absorber, a pigment, a dye, a filler, a branching agent and mixtures thereof.

18. An article of manufacture comprising the composition of claim 1.

19. The article of manufacture of claim 18 wherein the article is selected from the group consisting of film, sheet, tubing, pipe, fiber, container preform, blow molded article, thermoformed article and flexible bag.

20. A method for reducing the gas permeability of polyester articles comprising: adding a copolyester ether to a polyester, melting the mixture, and forming an article; wherein the copolyester ether comprises a polyether segment comprising poly(tetramethylene-co-alkylene ether).


**Patentansprüche**

1. Zusammensetzung, die einen Polyester, einen Copolyesterether und einen Oxidationskatalysator aufweist, wobei der Copolyesterether ein Polyethersegment mit Poly(tetramethylen-co-alkylenether) aufweist.

2. Zusammensetzung nach Anspruch 1, wobei der Copolyesterether ferner ein Polyethersegment aus einem Poly(alkylenoxid)glycol aufweist, das aus der Gruppe ausgewählt ist, die aus Poly(ethylenoxid)glycol, Poly(trimethylenoxid)glycol, Poly(tetramethylenoxid)glycol, Poly(pentamethylenoxid)glycol, Poly(hexamethylenoxid)glycol, Poly(heptamethylenoxid)glycol, Poly(octamethylenoxid)-glycol und von cyclischen Ether-Monomeren abgeleiteten Poly(alkylenoxid)glycolen besteht.

3. Zusammensetzung nach Anspruch 1, wobei das Alkylen des Poly(tetramethylen-co-alkylenethers) aus der Gruppe ausgewählt ist, die aus Ethylen, Propylen und Butylen besteht.

4. Zusammensetzung nach Anspruch 3, wobei das Alkylen Ethylen ist.

5. Zusammensetzung nach Anspruch 1, wobei das Molekulargewicht des Polyethersegments im Bereich von 200 g/mol bis 5000 g/mol liegt.

6. Zusammensetzung nach Anspruch 1, wobei der Copolyesterether in einem Anteil von mindestens 0,5 Gew.-% der Gesamtzusammensetzung anwesend ist.

7. Zusammensetzung nach Anspruch 1, wobei der Copolyesterether in einem Anteil von 0,5 Gew.-% bis 10 Gew.-% der Gesamtzusammensetzung anwesend ist.

8. Zusammensetzung nach Anspruch 1, wobei das Polyethersegment in einem Anteil von 15 Gew.-% bis 95 Gew.-% des Copolyesterethers anwesend ist.

**9.** Zusammensetzung nach Anspruch 1, wobei der Polyester mindestens ein Element der Gruppe ist, die aus Polyethylenterephthalat, Polyethylennaphthalat, Polyethylenisophthalat, Copolymeren von Polyethylenterephthalat, Copolymeren von Polyethylennaphthalat, Copolymeren von Polyethylenisophthalat und deren Gemischen besteht.

**10.** Zusammensetzung nach Anspruch 9, wobei der Polyester ein Copolymer von Polyethylenterephthalat ist.

**11.** Zusammensetzung nach Anspruch 1, wobei der Oxidationskatalysator ein Übergangsmetallsalz mit i) einem Metall mit mindestens einem Element der Gruppe, die aus Cobalt, Kupfer, Rhodium, Ruthenium, Palladium, Wolfram, Osmium, Cadmium, Silber, Tantal, Hafnium, Vanadium, Titan, Chrom, Nickel, Zink, Mangan und deren Gemischen besteht, und ii) einem Gegenion mit mindestens einem Element der Gruppe, die aus Carboxylat, Oxid, Borid, Carbonat, Chlorid, Dioxid, Hydroxid, Nitrat, Phosphat, Sulfat, Silicat und deren Gemischen besteht, aufweist.

**12.** Zusammensetzung nach Anspruch 11, wobei das Carboxylat aus der Gruppe ausgewählt ist, die aus Neodecanoat, Octanoat, Stearat, Acetat, Naphthalat, Lactat, Maleat, Acetylacetonat, Linoleat, Oleat, Palmitat und 2-Ethylhexanoat besteht.

**13.** Zusammensetzung nach Anspruch 1, wobei der Oxidationskatalysator Cobaltstearat oder Cobaltacetat aufweist.

**14.** Zusammensetzung nach Anspruch 1, wobei der Oxidationskatalysator in einem Anteil von mindestens 10 ppm der Gesamtzusammensetzung anwesend ist.

**15.** Zusammensetzung nach Anspruch 1, wobei der Oxidationskatalysator in einem Anteil von 50 ppm bis 500 ppm der Gesamtzusammensetzung anwesend ist.

**16.** Zusammensetzung nach Anspruch 1, die ferner einen Zusatzstoff aufweist.

**17.** Zusammensetzung nach Anspruch 16, wobei der Zusatzstoff mindestens ein Element der Gruppe aufweist, die aus einem Wärmestabilisator, einem Antiblockmittel, einem Antioxidationsmittel, einem Antistatikmittel, einem UV-Absorber, einem Pigment, einem Farbstoff, einem Füllstoff, einem Verzweigungsmittel und Gemischen davon besteht.

**18.** Fertigungsartikel, der die Zusammensetzung nach Anspruch 1 aufweist.

**19.** Fertigungsartikel nach Anspruch 18, wobei der Artikel aus der Gruppe ausgewählt ist, die aus Film, Folie, Schlauch, Rohr, Faser, einem Behältervorformling, einem blasgeformten Artikel, einem warmgeformten Artikel und einem flexiblen Beutel besteht.

**20.** Verfahren zur Verringerung der Gasdurchlässigkeit von Polyesterartikeln, wobei das Verfahren aufweist: Zugabe eines Copolyesterethers zu einem Polyester, Schmelzen des Gemischs und Formen eines Artikels; wobei der Copolyesterether ein Polyethersegment mit Poly(tetramethylen-co-alkylenether) aufweist.

**Revendications**

**1.** Composition comprenant un polyester, un copolyester-éther et un catalyseur d'oxydation, dans laquelle le copolyester-éther comprend un segment de polyéther comprenant un poly(tétraméthylène-co-alkylène éther).

**2.** Composition selon la revendication 1, dans laquelle ledit copolyester-éther comprend en outre un segment de polyéther d'un poly(alkylène oxyde)glycol choisi dans le groupe constitué de poly(éthylène oxyde)glycol, de poly(triméthylène oxyde)glycol, de poly(tétraméthylène oxyde)glycol, de poly(pentaméthylène oxyde)glycol, de poly(hexaméthylène oxyde)glycol, de poly(heptaméthylène oxyde)glycol, de poly(octaméthylène oxyde)glycol et de poly(alkylène oxyde)glycols dérivés de monomères d'éthers cycliques.

**3.** Composition selon la revendication 1, dans laquelle ledit alkylène dudit poly(tétraméthylène-co-alkylène éther) est choisi dans le groupe constitué d'éthylène, de propylène et de butylène.

**4.** Composition selon la revendication 3, dans laquelle ledit alkylène est un éthylène.

**5.** Composition selon la revendication 1, dans laquelle le poids moléculaire dudit segment de polyéther est dans l'intervalle de 200 g/mole à 5000 g/mole.

6. Composition selon la revendication 1, dans laquelle ledit copolyester-éther est présent dans une quantité d'au moins 0,5% en poids de la composition totale.

7. Composition selon la revendication 1, dans laquelle ledit copolyester-éther est présent dans une quantité de 0,5% en poids à 10% en poids de la composition totale.

8. Composition selon la revendication 1, dans laquelle ledit segment de polyéther est présent dans une quantité de 15% en poids à 95% en poids dudit copolyester-éther.

9. Composition selon la revendication 1, dans laquelle ledit polyester est au moins un élément choisi dans le groupe constitué de polyéthylène téréphtalate, de polyéthylène naphtalate, de polyéthylène isophtalate, de copolymères de polyéthylène téréphtalate, de copolymères de polyéthylène naphtalate, de copolymères de polyéthylène isophtalate et de mélanges de ceux-ci.

10. Composition selon la revendication 9, dans laquelle ledit polyester est un copolymère de polyéthylène téréphtalate.

11. Composition selon la revendication 1, dans laquelle le catalyseur d'oxydation comprend un sel de métal de transition comprenant i) un métal comprenant au moins un élément choisi dans le groupe constitué de cobalt, de cuivre, de rhodium, de ruthénium, de palladium, de tungstène, d'osmium, de cadmium, d'argent, de tantale, d'hafnium, de vanadium, de titane, de chrome, de nickel, de zinc, de manganèse et de mélanges de ceux-ci, et ii) un contre-ion comprenant au moins un élément choisi dans le groupe constitué de carboxylate, d'oxyde, de borure, de carbonate, de chlorure, de dioxyde, d'hydroxyde, de nitrate, de phosphate, de sulfate, de silicate et de mélanges de ceux-ci.

12. Composition selon la revendication 11, dans laquelle ledit carboxylate est choisi dans le groupe constitué de néodécanoate, d'octanoate, de stéarate, d'acétate, de naphtalate, de lactate, de maléate, d'acétylacétonate, de linoléate, d'oléate, de palmitate et de 2-éthylhexanoate.

13. Composition selon la revendication 1, dans laquelle ledit catalyseur d'oxydation comprend un stéarate de cobalt ou un acétate de cobalt.

14. Composition selon la revendication 1, dans laquelle ledit catalyseur d'oxydation est présent dans une quantité d'au moins 10 ppm de la composition totale.

15. Composition selon la revendication 1, dans laquelle ledit catalyseur d'oxydation est présent dans une quantité de 50 ppm à 500 ppm de la composition totale.

16. Composition selon la revendication 1, comprenant en outre un additif.

17. Composition selon la revendication 16, dans laquelle l'additif comprend au moins un élément choisi dans le groupe constitué d'un stabilisant thermique, d'un agent anti-bloquant, d'un antioxydant, d'un agent antistatique, d'un absorbeur d'UV, d'un pigment, d'un colorant, d'une charge, d'un agent de ramification et de mélanges de ceux-ci.

18. Article de fabrication comprenant la composition selon la revendication 1.

19. Article de fabrication selon la revendication 18, où l'article est choisi dans le groupe constitué d'un film, d'une feuille, d'un tube, d'un tuyau, d'une fibre, d'une préforme de récipient, d'un article moulé par soufflage, d'un article thermoformé et d'un sac flexible.

20. Procédé pour la réduction de la perméabilité aux gaz d'articles de polyester comprenant: l'ajout d'un copolyester-éther à un polyester, la fusion du mélange et la formation d'un article; dans lequel le copolyester-éther comprend un segment de polyéther comprenant un poly(tétraméthylène-co-alkylène éther).

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 6455620 B

### Non-patent literature cited in the description

- **SEKELIK et al.** *Journal of Polymer Science Part B: Polymer Physics,* 1999, vol. 37, 847-857
- **QURESHI et al.** *Journal of Polymer Science Part B: Polymer Physics,* 2000, vol. 38, 1679-1686
- **POLYAKOVA et al.** *Journal of Polymer Science Part B: Polymer Physics,* 2001, vol. 39, 1889-1899